# EUROPEAN PATENT SPECIFICATION

(11) **EP 2 933 860 B1**
(45) Date of publication and mention of the grant of the patent: **08.04.2020**
(21) Application number: 15162755.1
(22) Date of filing: 08.04.2015
(51) Int. Cl.: H01M 2/10, H01M 10/04, H01M 10/42

(54) **SECONDARY BATTERY**
SEKUNDÄRBATTERIE
BATTERIE SECONDAIRE

(30) Priority: 14.04.2014 KR 20140044015
(43) Date of publication of application: 21.10.2015
(73) Proprietor: Samsung SDI Co., Ltd., Yongin-si, Gyeonggi-do (KR)
(72) Inventor: Kwak, Seung-Ho, Gyeonggi-do (KR); Seo, Yong-Chul, Gyeonggi-do (KR); Guen, Min-Hyung, Gyeonggi-do (KR)
(74) Representative: Mounteney, Simon James

(56) References cited:
- EP-A1- 2 309 569
- EP-A1- 2 328 204
- EP-A1- 2 410 594
- US-A1- 2006 024 578

## Description

### BACKGROUND

### 1. Field

The present invention relates to a secondary battery, and, more particularly, to a secondary battery which is capable of improving safety.

### 2. Description of the Related Art

A secondary battery is a battery that is repeatedly charged or discharged, unlike a primary battery. A low-capacity secondary battery may be used for a portable and small electronic device, such as a mobile phone, a notebook computer or a camcorder, whereas a high-capacity secondary battery may be used as a power source for driving a motor of a hybrid vehicle or the like.

The secondary battery includes an electrode assembly, a case, a cap plate, and an electrode terminal. The electrode assembly has a separator, and an anode and a cathode provided on opposite surfaces of the separator. The case accommodates the electrode assembly therein. The cap plate closes an opening of the case. The electrode terminal is installed to pass through the cap plate and thus is electrically connected to the electrode assembly.

Known secondary batteries can exhibit a number of problems. First the electrode assembly can become unwound due to its own weight and vibrations on certain axes. Secondly, the safety of the battery can suffer due to damage caused by external shocks. EP 2309569 and EP 238204 make disclosures related to secondary batteries.

### SUMMARY

The present invention has been made keeping in mind the above problems occurring in the related art. According to an aspect, there is provided a secondary battery according to Claim 1. Details of embodiments are provided in the dependent claims.

According to an embodiment of the present invention, there is provided a secondary battery, including an electrode assembly including a first electrode, a second electrode, and a separator interposed between the first and second electrodes; a case configured to accommodate the electrode assembly therein, with an opening formed in a top of the case; a cap plate configured to close the opening of the case; and a bottom retainer disposed on a bottom in the case, wherein the bottom retainer includes a support portion to support the electrode assembly, and at least one contact portion to make contact with the bottom of the case.

The support portion of the bottom retainer may be formed in a shape of a flat plate.

Further, the contact portion of the bottom retainer may extend from a predetermined position on an underside of the support portion towards the bottom of the case.

The contact portion may include an inclined portion that extends obliquely from the support portion towards the bottom of the case, and a horizontal portion that extends from an end of the inclined portion in such a way as to be parallel to the bottom of the case.

The contact portion may be configured such that inclined portions are adjacent to each other by twos, the adjacent inclined portions being inclined in such a way that a distance between the inclined portions increases in a direction from an upper position to a lower position.

Moreover, at least one hole may be formed in the support portion.

The hole may be formed in the support portion located above the contact portion.

At least portion of an edge of the hole may have a wave pattern.

At least portion of an edge of the support portion may have a wave pattern.

Further, the support portion and the contact portion may be alternately arranged, and a vertical section of the bottom retainer coming into contact with a long side of the case may be formed in an embossing shape.

The bottom retainer may be formed as an insulation member.

As is apparent from the above description, the present invention is advantageous in that the contact portion of the bottom retainer has a pressure function that serves to continuously push the electrode assembly in a Z-axis direction, thus preventing the electrode assembly from being unwound due to its own weight and Z-axis vibrations.

Further, the present invention is advantageous in that the safety of the secondary battery can be improved, and the contact portion of the bottom retainer absorbs external shocks, thus enhancing durability.

Furthermore, the present invention is advantageous in that the hole is formed at a predetermined position on the bottom retainer, thus allowing the electrolyte in the case bottom to be smoothly absorbed by the electrode assembly and thereby preventing the performance of the secondary battery from being degraded.

When an edge of the bottom retainer is formed in a wave pattern, this serves as a path for gas discharged from an electrode assembly when a fault occurs in a battery cell.

At least some of the above and other features of the invention are set-out in the claims.

### BRIEF DESCRIPTION OF THE DRAWINGS

Example embodiments of the invention will now be described more fully hereinafter with reference to the accompanying drawings; however, the invention may be embodied in different forms and should not be construed as limited to the embodiments set forth herein. Rather, these embodiments are provided so that this disclosure will be thorough, and will convey the scope of the invention to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a perspective view showing a secondary battery according to the present invention;
FIG. 2 is a sectional view taken along line A-A' of FIG. 1;
FIG. 3A is a perspective view showing a bottom retainer according to a first embodiment of the present invention;
FIG. 3B is a sectional view taken along line B-B' of FIG. 3A;
FIG. 4 is a perspective view showing a bottom retainer according to a second embodiment of the present invention;
FIG. 5A is a perspective view showing a bottom retainer according to a third embodiment of the present invention; and
FIG. 5B is a sectional view taken along line C-C' of FIG. 5A.

### DETAILED DESCRIPTION

The invention will be described more fully hereinafter with reference to the accompanying drawings, in which example embodiments of the invention are shown. While preferred embodiments of the invention have been described using specific terms, such description is for illustrative purposes only, and it is to be understood that changes and variations may be made without departing from the scope of the following claims.

In the following description, if it is decided that the detailed description of known function or configuration related to the invention makes the subject matter of the invention unclear, the detailed description is omitted. Further, like reference numerals are used to identify like elements throughout different drawings. For clarity and convenience of description, the size or shape of elements shown in the drawings may not be illustrated to scale.

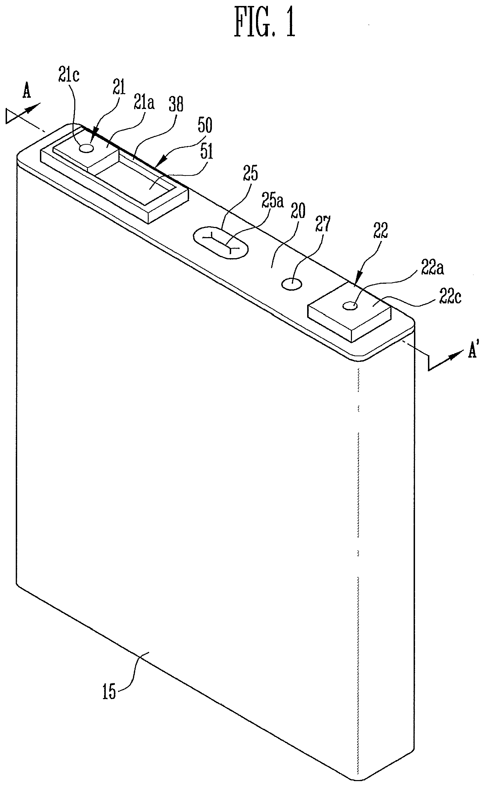

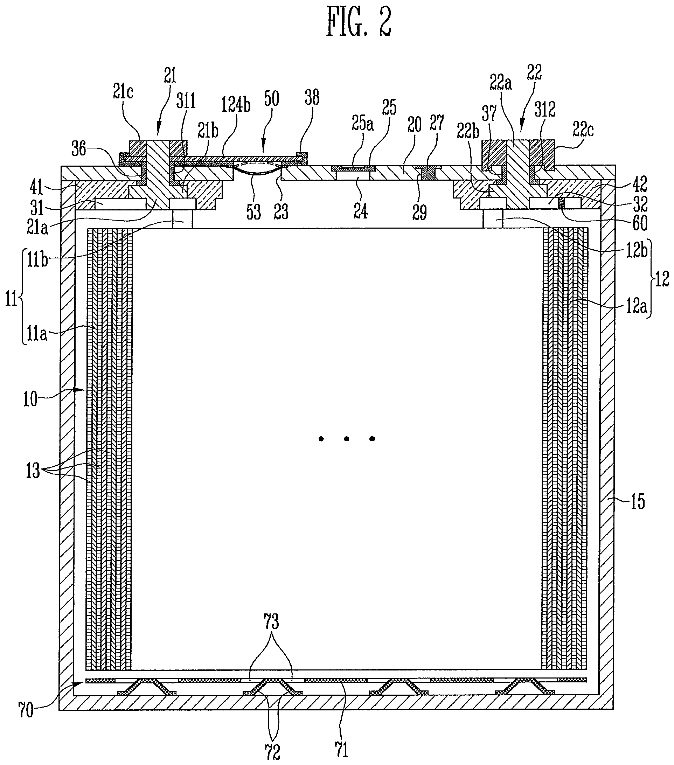

FIG. 1 is a perspective view showing a secondary battery according to the present invention, and FIG. 2 is a sectional view taken along line A-A' of FIG. 1.

Referring to FIGS. 1 and 2, the secondary battery according to the present invention includes an electrode assembly 10, a first lead tab 31, a second lead tab 32, a case 15 accommodating the above-mentioned elements therein and having on a top thereof an opening, and a cap plate 20 configured to close the opening of the case 15. Further, the secondary battery includes a first electrode terminal 21 (hereinafter referred to as a "cathode terminal") and a second electrode terminal 22 (hereinafter referred to as an "anode terminal") which are provided on the cap plate 20, an external short-circuit portion 50 provided around the cathode terminal 21, and a fuse portion 60 provided around the anode terminal 22.

Further, a plate-shaped bottom retainer 70 is disposed on a bottom in the case 15. Here, the bottom retainer 70 includes a support portion 71 that supports the electrode assembly 10, and at least one contact portion 72 that is in contact with the bottom of the case 15. In this regard, the support portion 71 of the bottom retainer 70 may be formed in the shape of a plate, and the contact portion 72 may extend from a position on an underside of the support portion 71 towards the bottom of the case 15.

Further, at least one hole 73 may be formed in the support portion 71, thus improving the flow of an electrolyte between the bottom of the case 15 and the bottom retainer 70. That is, the hole 73 may function as a passage to allow the electrolyte, which is collected between the bottom of the case 15 and the bottom retainer 70 and is not absorbed by the electrode assembly 10, to flow smoothly. Further, such a bottom retainer 70 may be made of an insulating material to be insulated from the electrode assembly 10.

Hereinafter, respective elements of the secondary battery according to the present invention will be described.

The electrode assembly 10 intended to charge or discharge an electric current, according to the present invention, is formed by placing a first electrode 11 (hereinafter referred to as a "cathode") and a second electrode 12 (hereinafter referred to as an "anode") on the opposite sides of a separator 13 that is an insulator, and then winding the cathode 11, the separator 13 and the anode 12 in a jelly-roll form. Each of the cathode 11 and the anode 12 includes a coating portion 11a, 12a and a non-coating portion 11b, 12b. The coating portion is formed by applying an active material to a current collector of a metal plate. The non-coating portion is a portion of the current collector which is exposed because no active material is applied thereto. Here, the non-coating portion 11b of the cathode 11 and the non-coating portion 12b of the anode 12 protrude upwards from the electrode assembly 10.

The case 15 has the shape of a rectangular parallelepiped to define a space for receiving the electrode assembly 10 and the electrolyte therein. An opening connecting an outside with an internal space of the battery is formed in a surface of the rectangular parallelepiped. The opening allows the electrode assembly 10 to be inserted into the case 15.

The cap plate 20 is made of a thin steel sheet to be mounted to the opening of the case 15, thus closing the case 15. The cap plate 20 further includes an electrolyte inlet port 29 and a vent hole 24. After the cap plate 20 is coupled to the case 15, the electrolyte inlet port 29 allows the electrolyte to be injected into the case 15. After the electrolyte has been injected, the electrolyte inlet port 29 is sealed by a sealing stopper 27.

The vent hole 24 for discharging an internal pressure of the secondary battery is closed by a vent plate 25. If the internal pressure of the secondary battery reaches a preset level, the vent plate 25 is cut to open the vent hole 24. The vent plate 25 has a notch 25a to induce the cutting.

The cathode terminal 21 and the anode terminal 22 are installed to pass through the cap plate 20 and are electrically connected to the electrode assembly 10. That is, the cathode terminal 21 is electrically connected to the cathode 11 of the electrode assembly 10, while the anode terminal 22 is electrically connected to the anode 12 of the electrode assembly 10. Thus, polarities of the electrode assembly 10 are revealed to the outside of the case 15, via the cathode terminal 21 and the anode terminal 22.

Since the cathode terminal 21 and the anode terminal 22 inside the cap plate 20 have the same structure, only one of the cathode and anode terminals 21 and 22 will be described. Meanwhile, since the cathode terminal 21 and the anode terminal 22 outside the cap plate 20 have different structures, the cathode and anode terminals 21 and 22 will be separately described.

The cathode, anode terminal 21, 22 includes a rivet terminal 21a, 22a, a flange 21b, 22b, and a plate terminal 21c, 22c. The rivet terminal 21a, 22a is installed in the terminal hole 311, 312 of the cap plate 20. The flange 21b, 22b is provided inside the cap plate 20, and extends widely in such a way as to be integrated with the rivet terminal 21a, 22a. The plate terminal 21c, 22c is disposed outside the cap plate 20 to be connected to the rivet terminal 21a, 22a by riveting or welding.

The cathode, anode gasket 36, 37 is installed between the rivet terminal 21a, 22a of the cathode, anode terminal 21, 22 and an inner surface of the terminal hole 311, 312 of the cap plate 20, thus sealing a gap between the rivet terminal 21a, 22a of the cathode, anode terminal 21, 22 and the cap plate 20. The cathode, anode gasket 36, 37 extends further between the flange 21b, 22b and the inner surface of the cap plate 20, thus further sealing a gap between the flange 21b, 22b and the cap plate 20. That is, the cathode, anode gasket 36, 37 is installed around the cathode, anode terminal 21, 22 on the cap plate 20, thus preventing the electrolyte from leaking out through the terminal hole 311, 312.

Meanwhile, the cathode, anode lead tab 31, 32 electrically connects the cathode, anode terminal 21, 22 to the cathode, anode non-coating portion 11b, 12b of the electrode assembly 10. That is, the cathode, anode lead tab 31, 32 is coupled to a lower end of the rivet terminal 21a, 22a, and caulking is performed on the lower end, so that the cathode, anode lead tab 31, 32 is connected to the lower end of the rivet terminal 21a, 22a while being supported by the flange 21b, 22b.

Although not shown in the drawings, the present invention may also be applied to the secondary battery having two or more electrode assemblies. In this case, the plurality of cathode, anode non-coating portions 11b, 12b may be electrically connected by the cathode, anode lead tab 31, 32.

The cathode, anode insulation member 41, 42 is provided between the cathode, anode lead tab 31, 32 and the cap plate 20, thus electrically insulating the cathode, anode lead tab 31, 32 from the cap plate 20. Further, one side of the cathode, anode insulation member 41, 42 is coupled to the cap plate 20, while the other side thereof surrounds the cathode, anode lead tab 31, 32, the rivet terminal 21a, 22a and the flange 21b, 22b, thus stabilizing a connecting structure thereof.

The external short-circuit portion 50 pertaining to the plate terminal 21c will be described below. Referring to FIG. 2, the external short-circuit portion 50 includes a short-circuit tab 51 and a short-circuit member 53, which are spaced apart from each other or cause a short circuit depending on the internal pressure.

The short-circuit tab 51 is electrically connected to the rivet terminal 21a of the cathode terminal 21, and is disposed outside the cap plate 20 with an insulation member 38 interposed between the short-circuit tab 51 and the cap plate 20. The insulation member 38 is provided between the short-circuit tab 51 and the cap plate 20, thus electrically insulating the short-circuit tab 51 and the cap plate 20 from each other. That is, the cap plate 20 is electrically insulated from the cathode terminal 21.

The short-circuit tab 51 and the terminal plate 21c are placed on an upper end of the rivet terminal 21a, and then caulking is performed on the upper end thereof, so that the short-circuit tab 51 and the terminal plate 21c are coupled to the upper end of the rivet terminal 21a. Thus, the short-circuit tab 51 and the terminal plate 21c are fixedly supported on the cap plate 20 with the insulation member 38 interposed therebetween.

A short-circuit member 53 is installed in a short-circuit hole 23 of the cap plate 20. The short-circuit tab 51 is connected to the cathode terminal 21 to extend towards the short-circuit member 53. Thus, the short-circuit tab 51 and the short-circuit member 53 face each other in the short-circuit hole 23 to be spaced apart from each other (see a solid line) or to cause a short circuit (see an imaginary line).

When the internal pressure of the secondary battery rises, the short-circuit member 53 is deformed from the state shown by the solid line of FIG. 2 to the state shown by the imaginary line thereof, thus coming into contact with the short-circuit tab 51. Thus, the short-circuit tab 51 is electrically connected to the cap plate 20, thus maintaining the short-circuit state of the electrode assembly 10. In the event of the short circuit, a high-voltage current is instantaneously discharged between the cathode and anode terminals 21 and 22 through the short-circuit tab 51 and the short-circuit member 53. Here, the fuse portion 60 may be melted and cut in a discharge line connecting the electrode assembly 10 with the cathode and anode terminals 21 and 22.

When the fuse portion 60 is melted and cut as such, arc may be produced at a cut point. In this case, arc debris drops to the bottom in the case 15, so that the bottom of the case 15 may be melted and damaged. However, such a problem may be prevented by the bottom retainer 70 disposed on the bottom in the case 15, according to the present invention.

The bottom retainer 70 according to the present invention includes a plate-shaped support portion 71 configured to support the electrode assembly 10, and a contact portion 72 configured to extend from the underside of the support portion 71 to the bottom of the case 15. Thereby, even if the secondary battery is shocked, the contact portion 72 performs a pressure function, thus preventing the jelly roll from being unwound when the electrode assembly 10 vibrates up and down, and thereby improving safety.

Further, external shocks may be absorbed by the pressure function of the bottom retainer 70, thus enhancing the durability of the secondary battery. Moreover, a hole 73 is formed in the bottom retainer 70, so that gas may be smoothly discharged from the electrode assembly 10 when a fault occurs in the secondary battery, thus ensuring the safety, and besides, improving the quality of the secondary battery.

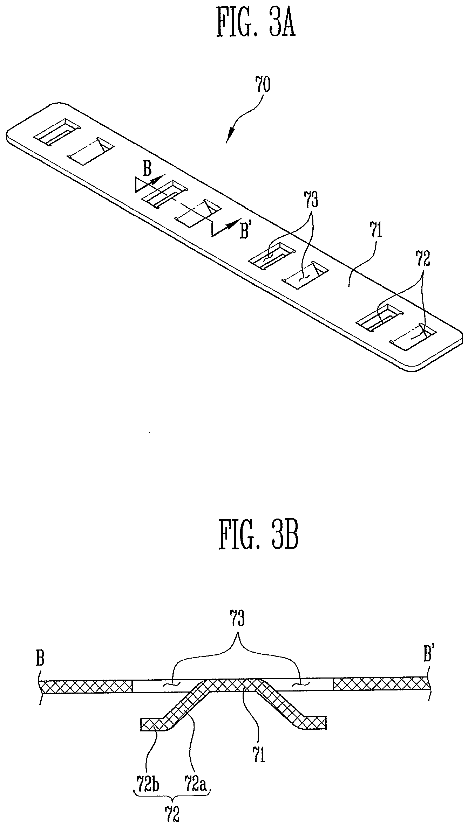

FIG. 3A is a perspective view showing a bottom retainer according to a first embodiment of the present invention, and FIG. 3B is a sectional view taken along line B-B' of FIG. 3A.

Referring to FIGS. 3A and 3B, the bottom retainer 70 is disposed on the bottom in the case 15, and includes a support portion 71 to support the electrode assembly 10 and at least one contact portion 72 to make contact with the bottom of the case 15. Such a bottom retainer 70 is made of an insulating material, thus performing an insulating function between the bottom of the case 15 and the electrode assembly 10.

Here, the support portion 71 of the bottom retainer 70 is formed in the shape of a flat plate. Further, the contact portion 72 of the bottom retainer 70 extends from the underside of the support portion 71 towards the bottom of the case 15.

The contact portion 72 includes an inclined portion 72a and a horizontal portion 72b. The inclined portion 72a extends obliquely from the support portion 71 towards the bottom of the case 15. The horizontal portion 72b is formed on an end of the inclined portion 72a in such a way as to be parallel to the bottom of the case 15. Since the bottom of the case 15 is in contact with the horizontal portion 72b as such, the bottom retainer 70 can more stably support the electrode assembly 10.

The contact portion 72 of the bottom retainer 70 formed as such serves to continuously push the electrode assembly 10 upwards, thus preventing the electrode assembly 10 from being unwound due to its weight and vertical vibrations.

Further, the contact portion 72 may be configured such that inclined portions 72a are adjacent to each other by twos. The adjacent inclined portions 72a may be formed in such a way that a distance between the inclined portions 72a increases in a direction from an upper position to a lower position.

At least one hole 73 is formed at a position on the support portion 71. Preferably, the hole 73 may be formed in the support portion 71 positioned above the contact portion 72. As such, the hole 73 formed in the support portion 71 allows the electrolyte to flow smoothly.

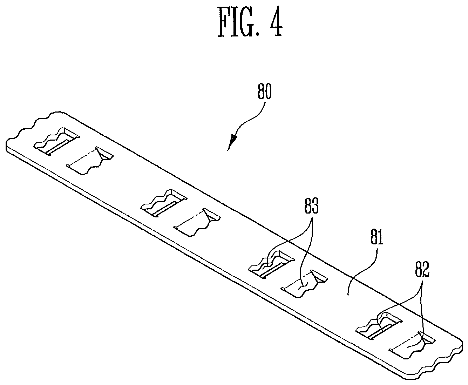

FIG. 4 is a perspective view showing a bottom retainer according to a second embodiment of the present invention.

Referring to FIG. 4, the bottom retainer 80 according to the second embodiment of the present invention is identical with the bottom retainer 70 according to the first embodiment in that it includes a support portion 81 having the shape of a flat plate, and a contact portion 82 extending from the underside of the support portion 81 towards the bottom of the case 15.

Here, a plurality of contact portions 82 is provided in such a way as to be adjacent to each other by twos. The adjacent contact portions 82 are inclined in such a way that a distance between the inclined portions 82 increases in a direction from an upper position to a lower position. Further, a plurality of holes 83 is formed in the support portion 81 to serve as a passage that allows the electrolyte to flow smoothly.

In this regard, at least portion of the edge of each hole 83 may have a wave pattern, and at least portion of the edge of the support portion 81 may have a wave pattern. The hole 83 may be formed in a rectangular shape, and the edge of the hole 83 parallel to the short side of the case 15 may be formed in a wave pattern. Further, the edge of the support portion 81 of the bottom retainer 80, which is in contact with the short side of the case 15, may also be formed in a wave pattern.

Thereby, the bottom retainer 80 always and continuously pushes the electrode assembly 10 upwards. Such a configuration may prevent a path for gas discharged from the electrode assembly 10 from being clogged when a fault occurs in the secondary battery. Further, the strength of the bottom retainer 80 may be reinforced by the support portion 81 of the wave pattern.

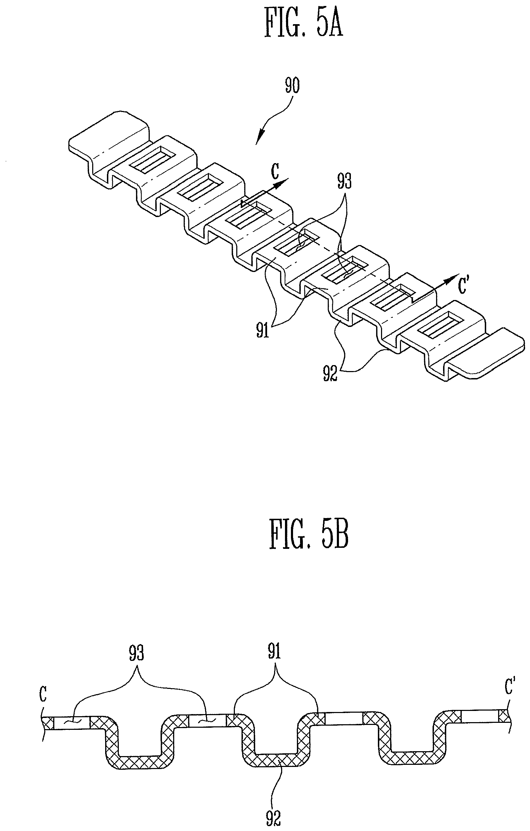

FIG. 5A is a perspective view showing a bottom retainer according to a third embodiment of the present invention, and FIG. 5B is a sectional view taken along line C-C' of FIG. 5A.

Referring to FIGS. 5A and 5B, the bottom retainer 90 according to the third embodiment of the present invention includes support portions 91 that support the electrode assembly 10 (see FIG. 2), and contact portions 92 that come into contact with a bottom of the case 15 (see FIG. 2).

Here, the support portions 91 and the contact portions 92 are alternately formed. Thus, a vertical section of the bottom retainer 90 coming into contact with a long side of the case 15 may be formed in an embossing shape. That is, the bottom retainer 90 takes the embossing shape due to a height difference between the support portions 91 supporting the electrode assembly 10 and the contact portions 92 coming into contact with the bottom of the case 15.

Further, at least one hole 93 is formed in each support portion 91, thus serving as a passage that allows the electrolyte to flow between the bottom retainer 90 and the bottom of the case 15. That is, since the bottom retainer 90 does not completely come into close contact with the bottom of the case 15, the electrolyte may be collected in the bottom of the case 15. However, since the hole 93 is formed in each support portion 91 of the bottom retainer 90, it is possible to prevent the electrolyte from being collected in the bottom of the case 15.

Example embodiments of the invention have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
an electrode assembly (10) including a first electrode (11), a second electrode (12), and a separator (13) interposed between the first and second electrodes;
a case (15) configured to accommodate the electrode assembly therein, with an opening formed in a top of the case;
a cap plate (20) configured to close the opening of the case; and
a bottom retainer (70, 80, 90) disposed on a bottom in the case,
wherein the bottom retainer (70, 80, 90) comprises a support portion (71, 81, 91) formed in a shape of a flat plate and supporting the electrode assembly (10), and at least one contact portion (72, 82, 92) making contact with the bottom of the case,
wherein the contact portion (72, 82, 92) of the bottom retainer extends from a predetermined position on an underside of the support portion (71, 81, 91) towards the bottom of the case,
**characterized in that** at least one hole (73, 83, 93) is formed in the support portion (71, 81, 91) at a location above the contact portion and
wherein the contact portion (72) comprises an inclined portion (72a) that extends obliquely from the support portion (71) towards the bottom of the case, and a horizontal portion (72b) that extends from an end of the inclined portion in such a way as to be parallel to the bottom of the case, and wherein the contact portion of the bottom retainer is configured to continuously push the electrode assembly upwards.

2. A secondary battery according to claim 1, wherein the contact portion (72) is configured such that inclined portions (72a) are adjacent to each other in pairs, the adjacent inclined portions being inclined in such a way that a distance between the inclined portions increases in a direction from an upper position to a lower position.

3. A secondary battery according to any preceding claim, wherein at least portion of an edge of the hole (83) has a wave pattern.

4. A secondary battery according to any preceding claim, wherein at least portion of an edge of the support portion (81) has a wave pattern.

5. A secondary battery according to any preceding claim, wherein the support portion (91) and the contact portion (92) are alternately arranged, and a vertical section of the bottom retainer (90) coming into contact with a long side of the case is formed in an embossing shape.

6. A secondary battery according to any preceding claim, wherein the bottom retainer (70, 80, 90) is formed as an insulation member.

## Patentansprüche

1. Sekundärbatterie, die Folgendes umfasst:
eine Elektrodenbaugruppe (10), die eine erste Elektrode (11), eine zweite Elektrode (12) und einen Separator (13), der zwischen der ersten und der zweiten Elektrode eingeschoben ist, einschließt,
ein Gehäuse (15), das dafür konfiguriert ist, die Elektrodenbaugruppe in demselben aufzunehmen, mit einer Öffnung, die in einem Oberteil des Gehäuses geformt ist,
eine Deckplatte (20), die dafür konfiguriert ist, die Öffnung des Gehäuses zu verschließen, und
einen unteren Halter (70, 80, 90), der an einem Unterteil in dem Gehäuse angeordnet ist,
wobei der untere Halter (70, 80, 90) einen Stützabschnitt (71, 81, 91), der in der Form einer flachen Platte geformt ist und die Elektrodenbaugruppe (10) stützt, und wenigstens einen Kontaktabschnitt (72, 82, 92), der einen Kontakt mit dem Unterteil des Gehäuses herstellt, umfasst,
wobei sich der Kontaktabschnitt (72, 82, 92) des unteren Halters von einer vorbestimmten Position auf einer Unterseite des Stützabschnitts (71, 81, 91) zu dem Unterteil des Gehäuses hin erstreckt,
**dadurch gekennzeichnet, dass** wenigstens ein Loch (73, 83, 93) in dem Stützabschnitt (71, 81, 91) an einer Position oberhalb des Kontaktabschnitts geformt ist und
wobei der Kontaktabschnitt (72) einen geneigten Abschnitt (72a), der sich schräg von dem Stützabschnitt (71) aus zu dem Unterteil des Gehäuses hin erstreckt, und einen horizontalen Abschnitt (72b), der sich von einem Ende des geneigten Abschnitts aus auf eine solche Weise erstreckt, dass er parallel zu dem Unterteil des Gehäuses ist, umfasst und wobei der Kontaktabschnitt des unteren Halters dafür konfiguriert ist, die Elektrodenbaugruppe kontinuierlich nach oben zu drücken.

2. Sekundärbatterie nach Anspruch 1, wobei der Kontaktabschnitt (72) derart konfiguriert ist, dass geneigte Abschnitte (72a) einander in Paaren benachbart sind, wobei die benachbarten geneigten Abschnitte auf eine solche Weise geneigt sind, dass ein Abstand zwischen den geneigten Abschnitten in einer Richtung von einer oberen Position zu einer unteren Position abnimmt.

3. Sekundärbatterie nach einem der vorhergehenden Ansprüche, wobei wenigstens ein Abschnitt einer Kante des Lochs (83) ein Wellenmuster aufweist.

4. Sekundärbatterie nach einem der vorhergehenden Ansprüche, wobei wenigstens ein Abschnitt einer Kante des Stützabschnitts (81) ein Wellenmuster aufweist.

5. Sekundärbatterie nach einem der vorhergehenden Ansprüche, wobei der Stützabschnitt (91) und der Kontaktabschnitt (92) abwechselnd angeordnet sind und eine vertikale Sektion des unteren Halters (90), die in Kontakt mit einer langen Seite des Gehäuses kommt, in einer Prägegestalt geformt ist.

6. Sekundärbatterie nach einem der vorhergehenden Ansprüche, wobei der untere Halter (70, 80, 90) als ein Isolationselement geformt ist.

## Revendications

1. Batterie secondaire, comprenant :
un ensemble d'électrodes (10) incluant une première électrode (11), une deuxième électrode (12) et un séparateur (13) placé entre les première et deuxième électrodes ;
un boîtier (15) configuré pour recevoir l'ensemble d'électrodes, une ouverture étant formée dans une partie supérieure du boîtier ;
une plaque de capuchon (20) configurée pour fermer l'ouverture du boîtier ; et
un élément de retenue inférieur (70, 80, 90) disposé sur un fond dans le boîtier ;
dans laquelle l'élément de retenue inférieur (70, 80, 90) comprend une partie de support (71, 81, 91) formée en une forme d'une plaque plate et supportant l'ensemble d'électrodes (10), et au moins une partie de contact (72, 82, 92) établissant un contact avec le fond du boîtier ;
dans laquelle la partie de contact (72, 82, 92) de l'élément de retenue inférieur s'étend d'une position prédéterminée sur un côté inférieur de la partie de support (71, 81, 91) vers le fond du boîtier ;
**caractérisée en ce qu'**au moins un trou (73, 83, 93) est formé dans la partie de support (71, 81, 91) au niveau d'un emplacement situé au-dessus de la partie de contact ; et
dans laquelle la partie de contact (72) comprend une partie inclinée (72a) s'étendant de manière oblique de la partie de support (71) vers le fond du boîtier, et une partie horizontale (72b) s'étendant d'une extrémité de la partie inclinée de sorte à être parallèle au fond du boîtier, et dans laquelle la partie de contact de l'élément de retenue inférieur est configurée pour pousser de manière continue l'ensemble d'électrodes vers le haut.

2. Batterie secondaire selon la revendication 1, dans laquelle la partie de contact (72) est configurée de sorte que des parties inclinées (72a) sont adjacentes l'une à l'autre et sont agencées par paires, les parties inclinées adjacentes étant inclinées de sorte qu'une distance entre les parties inclinées est accrue dans une direction allant d'une position supérieure vers une position inférieure.

3. Batterie secondaire selon l'une quelconque des revendications précédentes, dans laquelle au moins une partie d'un bord du trou (83) comporte un motif ondulé.

4. Batterie secondaire selon l'une quelconque des revendications précédentes, dans laquelle au moins une partie d'un bord de la partie de support (81) comporte un motif ondulé.

5. Batterie secondaire selon l'une quelconque des revendications précédentes, dans laquelle la partie de support (91) et la partie de contact (92) sont agencées de manière alternée, une section verticale de l'élément de retenue inférieur (90) entrant en contact avec un côté long du boîtier étant formée en une forme gaufrée.

6. Batterie secondaire selon l'une quelconque des revendications précédentes, dans laquelle l'élément de retenue inférieur (70, 80, 90) a la forme d'un élément d'isolation.
